# EUROPEAN PATENT APPLICATION

(11) **EP 1 810 750 A1**
(43) Date of publication of application: **25.07.2007**
(21) Application number: 05783671.0
(22) Date of filing: 14.09.2005
(51) Int. Cl.: B01J 29/44, B01J 29/74, B01J 29/76, F01N 3/10

(54) **OXIDATION CATALYST FOR EXHAUST GAS PURIFICATION, CATALYST STRUCTURE FOR EXHAUST GAS PURIFICATION AND METHOD FOR PURIFYING EXHAUST GAS**

(30) Priority: 15.09.2004 JP 2004268221
(71) Applicant: N.E. Chemcat Corporation, Tokyo 105-6124 (JP)
(72) Inventor: KANNO, Yasuharu Numazu Jigyosho, N.E. Chemcat Corp, Numazu-shi Shizuoka 4100314 (JP); NAGATA, Makoto Numazu Jigyosho, N.E. Chemcat Corp., Numazu-shi Shizuoka 4100314 (JP)
(74) Representative: von Füner, Nicolai
(86) International application number: PCT/JP2005/016905
(87) International publication number: WO 2006/030808

(57) **Abstract**

An oxidation catalyst for exhaust gas purification, comprising a carrier containing titania and zeolite, and a noble metal supported on the carrier, wherein the quantity of the zeolite is within a range from 35 to 50% by weight relative to the catalyst. This oxidation catalyst for exhaust gas purification exhibits favorable SOF removal performance, particularly superior CO and HC removal performance, and favorable resistance to sulfur poisoning, and is consequently ideal for the purification of an exhaust gas emitted from an internal combustion engine such as a diesel engine that uses a fuel containing sulfur.

## Description

### [Technical Field]

The present invention relates to an oxidation catalyst for exhaust gas purification that is capable of efficiently removing hydrocarbons (hereafter also referred to as HC) and carbon monoxide (hereafter also referred to as CO) from an exhaust gas, and has resistance to sulfur poisoning, as well as a catalyst structure for exhaust gas purification comprising such a catalyst, and a method for purifying an exhaust gas that uses such a catalyst structure.

### [Background Art]

In the field of gasoline engines, strict exhaust gas regulations and the development of technologies capable of satisfying those regulations have resulted in tangible reductions in the levels of noxious substances within the exhaust gases. However, in the case of diesel engines, because of the peculiar circumstances that mean the noxious components are emitted mainly as particulate matter (PM), regulations and the development of technology have tended to lag those for gasoline engines, and the development of a catalyst for exhaust gas purification that is capable of reliably removing these noxious components is keenly sought. Furthermore, diesel oil is used as the fuel for diesel engines, and although the weight-referenced concentration of sulfur (hereafter also referred to as S) is not higher than 500 ppm (and is typically from approximately 30 to 35 ppm) within Japan, diesel oil containing from several hundred to several thousand ppm of sulfur is sometimes used overseas, meaning the catalyst for exhaust gas purification requires resistance to sulfur poisoning.

Gas purification devices for diesel engines that have been developed to date can be broadly classified into methods that use a trap (either with or without a catalyst), and flow-through type catalysts for decomposing the organic solvent-soluble fraction (hereafter also referred to as SOF). Of these, methods that use a trap operate by capturing, and thereby regulating the emission of, particulate matter, and these methods are particularly effective for exhaust gases with a high proportion of dry soot. However, in methods that use a trap, a regeneration device is required for incinerating the captured particulate matter, and numerous practical problems remain, including cracking of the catalyst structure during regeneration, blockages caused by ash, and the complexity of the system.

On the other hand, in flow-through SOF decomposition catalysts, in a similar manner to gasoline engines, a catalyst produced by supporting a catalytic metal such as a platinum group metal on a support layer of activated alumina (hereafter also referred to as Al₂O₃) or the like is used, and the SOF is removed by oxidation and decomposition together with CO and HC (patent reference 1). Although this flow-through SOF decomposition catalyst has a drawback in that the removal rate of dry soot is low, the quantity of dry soot can be reduced by improvements in the diesel engine and the fuel itself, and because this type of catalyst offers the significant advantage of not requiring a regeneration device, further improvements in the technology can be expected.

However, although flow-through SOF decomposition catalysts are capable of efficient decomposition of SOF under high temperature conditions, they have a drawback in that under low temperature conditions, the activity of the catalytic metal is low, and the SOF removal rate decreases. As a result, a phenomenon occurs wherein during engine startup or idling, the exhaust gas temperature is low, and the non-decomposed SOF is converted to soot that accumulates within the honeycomb passages of the catalyst. This accumulated soot causes clogging of the catalyst, which results in an undesirable reduction in the catalyst performance.

Furthermore, in flow-through SOF decomposition catalysts, another problem arises in that, at high temperatures, even the sulfur dioxide (hereafter also referred to as SO₂) within the exhaust gas is oxidized, thereby generating sulfur trioxide (hereafter also referred to as SO₃) and sulfur tetroxide (hereafter also referred to as SO₄), which are then converted to sulfates and actually result in an increase in the particulate matter. This is because although SO₂ is not measured as particulate matter, SO₃ and SO₄ are emitted as sulfates, which are measured as particulate matter. The exhaust gas from a diesel engine contains a particularly large quantity of oxygen gas, meaning the SO₂ oxidation reaction tends to occur readily.

Moreover, in flow-through SOF decomposition catalysts, it is known that the catalytic metal is poisoned by the large quantities of sulfur within diesel engine exhaust gases, causing a reduction in the catalytic activity of the catalytic metal. In other words, the SO₂ generated from the sulfur within the fuel reacts with the alumina of the catalyst support layer, forming aluminum sulfate (Al₂(SO₄)₃) that coats the catalytic metal, and as a result, the catalytic activity decreases.

On the other hand, in the field of exhaust gas treatment for boilers and the like, catalysts have been developed, and are now being used, in which titania (hereafter also referred to as TiO₂), which exhibits excellent resistance to sulfur poisoning, is used in the catalyst support layer, with a catalytic metal such as platinum or vanadium supported thereon. However, this type of catalyst exhibits no adsorption of SOF, and at low temperatures, HC and SOF are simply emitted directly.

Accordingly, a catalyst apparatus has been proposed in which a catalyst having a high-adsorption coating layer of activated alumina or zeolite but having no catalytic metal is positioned on the upstream side of the exhaust gas passage, and an oxidation catalyst having a catalytic metal supported on a carrier having a low-adsorption coating layer of titania or silica (hereafter also referred to as SiO₂) is positioned on the downstream side of the exhaust gas passage (patent reference 2).

According to this catalyst apparatus, the catalyst positioned on the upstream side adsorbs CO, HC and SOF at low temperatures, and also adsorbs SO₂, but because this catalyst positioned on the upstream side has no catalytic metal, oxidation of the SO₂ is prevented. Furthermore, in the catalyst positioned on the downstream side, the HC and SOF released from the upstream catalyst at high temperatures are oxidized and removed by the catalytic metal. On the other hand, SO₂ is also released from the catalyst positioned on the upstream side, but because the downstream catalyst exhibits weak adsorption properties, adsorption and oxidation of the SO₂ is suppressed, meaning the generation of sulfates is also suppressed.

In light of these circumstances, a catalyst apparatus for a diesel engine has been proposed that efficiently removes CO, HC, SOF and particulate matter comprising sulfates and the like from the exhaust gas (patent reference 3), but the removal performance of this catalyst is not entirely satisfactory, and further improvements are sought.

[Patent Reference 1]
   Japanese Laid-open publication (kokai) No. Hei 1-171626
[Patent Reference 2]
   Japanese Laid-open publication (kokai) No. Hei 4-267928
[Patent Reference 3]
   Japanese Laid-open publication (kokai) No. 2002-159861

### [Disclosure of Invention]

### [Problems Invention Aims to Solve]

Accordingly, an object of the present invention is to provide an oxidation catalyst for exhaust gas purification that exhibits favorable SOF removal performance, particularly superior CO and HC removal performance, and favorable resistance to sulfur poisoning, as well as a catalyst structure for exhaust gas purification comprising such a catalyst, and a method for purifying an exhaust gas that uses such a catalyst structure.

### [Means for Solution of the Problems]

In order to resolve the problems described above, the present invention provides an oxidation catalyst for exhaust gas purification, comprising a carrier containing a titania and a zeolite, and a noble metal supported on the carrier, wherein the quantity of the zeolite is within a range from 35 to 50% by weight relative to the catalyst.

Furthermore, the present invention also provides a catalyst structure for exhaust gas purification, comprising a support, and the aforementioned oxidation catalyst for exhaust gas purification supported on the support.

Moreover, the present invention also provides a method for purifying exhaust gas, wherein an exhaust gas emitted from an internal combustion engine is brought into contact with the aforementioned catalyst structure for exhaust gas purification.

### [Effects of Invention]

An oxidation catalyst for exhaust gas purification according to the present invention exhibits favorable SOF removal performance and particularly superior CO and HC removal performance. HC represent the main compositional element of the SOF and may form fine particulates, but because the above catalyst exhibits excellent adsorption and removal capabilities for HC, the catalyst also exhibits excellent removal of the SOF within the exhaust gas. In addition, by employing the above catalyst within a catalyst structure for exhaust gas purification, a catalyst structure can be prepared with the properties described above, which is particularly useful for the purification of exhaust gas from diesel engines. Furthermore, because the above catalyst, the above catalyst structure, and a method for purifying exhaust gas according to the present invention all exhibit excellent resistance to sulfur poisoning, they exhibit particularly superior purification capabilities for exhaust gas emitted from internal combustion engines such as diesel engines that use fuel containing sulfur, and can also be applied to particulate matter removal systems.

### [Best Mode of Carrying Out Invention]

### [Oxidation Catalyst for Exhaust Gas Purification]

An oxidation catalyst for exhaust gas purification according to the present invention comprises a carrier containing a titania and a zeolite, and a noble metal supported on the carrier. As follows is a detailed description of each of the components that constitute a catalyst of the present invention.

### [Zeolite]

The zeolite incorporated within a catalyst of the present invention is a component that has the function of efficiently adsorbing HC, CO and SOF, thereby improving the HC, CO and SOF removal activity of the catalyst.

There are no particular restrictions on the zeolite, provided it adsorbs HC, CO and SOF, although zeolites such as mordenite, ZSM-5 (such as H-ZSM-5), USY, ferrierite, and Beta-type zeolites (such as H-Beta, Fe-Beta, and Cu-Beta) are preferred as they offer larger HC and CO adsorption quantities. Of these, the zeolite preferably comprises a ZSM-5 type and/or a Beta type zeolite. The SiO₂/Al₂O₃ molar ratio of the zeolite is preferably 20 or greater, even more preferably within a range from 20 to 200, and is most preferably from 25 to 100.

In those cases where the zeolite has undergone ion exchange with a transition metal, the zeolite exhibits functionality as an oxidation catalyst. In terms of environmental friendliness, this transition metal is preferably either iron or copper, and examples of such zeolites include Fe-Beta and Cu-Beta type zeolites.

In order to ensure the high HC trapping rate derived from the zeolite, and also ensure a sufficiently large quantity of titania to obtain an improvement in the resistance to sulfur poisoning, the quantity of the zeolite relative to the weight of the catalyst must be within a range from 35 to 50% by weight, and is preferably from 38 to 45% by weight. If this quantity is less than 35% by weight, then the HC and CO removal performance may deteriorate. If the quantity exceeds 50% by weight, then the physical properties such as the viscosity of the slurry containing the catalyst may deteriorate, causing a deterioration in the coating properties. Provided the quantity satisfies the above range from 35 to 50% by weight, the oxidation catalyst of the present invention yields a coating catalyst layer that exhibits a high surface HC trap density, thereby functioning favorably in the adsorption-decomposition reaction of total hydrocarbons (THC) of comparatively high molecular weight, such as the SOF, that exist within the exhaust gas.

Furthermore, by combining the zeolite with a titania described below, because the actions and effects of both components can be obtained, the catalyst not only exhibits an improved removal rate for HC, CO and SOF, suppresses the generation sulfates, and enables the efficient removal of particulate matter, but also gains the synergy of the sulfur poisoning resistance of the silica that constitutes the zeolite, and the sulfur poisoning resistance of the titania described below, which enables an improvement in the resistance to sulfur poisoning.
A single zeolite may be used alone, or a combination of two or more different zeolites may be used.

### [Titania]

The titania incorporated within a catalyst of the present invention is an acidic oxide, and is consequently a component that has the functions of suppressing the adsorption of SO₂ and the generation of sulfates. Furthermore, the titania also has the function of preventing sulfur poisoning of the supported noble metal described below (namely, resistance to sulfur poisoning).

There are no particular restrictions on the titania, although anatase titania is typically used, and heat-resistant titanias are preferred, as they provide further improvement in the exhaust gas purification performance of the catalyst. These types of titania are typically in powder form, and in order to enable highly dispersed supporting of the noble metal described below, thereby improving the catalytic activity, the BET specific surface area is preferably within a range from 30 to 130 m²/g, and even more preferably from 50 to 120 m²/g.

The quantity of the titania is typically within a range from 35 to 60% by weight, and is preferably from 42 to 55% by weight, relative to the catalyst of the present invention. Provided this quantity satisfies the range from 35 to 60% by weight, the action of the titania manifests readily, and a catalyst with favorable activity is obtained.
A single titania may be used alone, or a combination of two or more different titania materials may be used.

### [Cocatalyst]

In addition to the components described above, a catalyst of the present invention may also include an optional cocatalyst, provided the actions and effects of the present invention are not impaired. In those cases where the noble metal described below has been included in sufficient quantity to ensure the desired level of oxidation functionality, a cocatalyst is not particularly necessary, but in those cases where the quantity of the noble metal is insufficient, a cocatalyst can be included to supplement the oxidation function. Examples of this cocatalyst include ceria (hereafter also referred to as CeO₂ and zirconia (hereafter also referred to as ZrO₂).

Including ceria can be expected to improve the oxidation function, so that even if the quantity of the noble metal described below is low, improvements in the combustion of SOF and the like can still be achieved. Furthermore, including zirconia can be expected to improve the heat resistance of the ceria, meaning reduction in the catalytic function in high temperature environments should be able to be prevented.
The ceria and zirconia may be included in any suitable form, although inclusion within the catalyst as a composite oxide is preferred.

In those cases where these types of cocatalysts are included, the effects of the titania, the zeolite and the cocatalyst manifest in a synergistic manner within the catalyst of the present invention, meaning CO and HC within the exhaust gas, as well as the particulate matter comprising SOF and sulfates, can be removed with favorable efficiency.

For the reasons outlined above, in those cases where a cocatalyst is used, the quantity of that cocatalyst is typically within a range from 0.1 to 15% by weight, and is preferably from 1 to 7% by weight, relative to the catalyst of the present invention. Provided the quantity of the cocatalyst satisfies this range from 0.1 to 15% by weight, the effects of the cocatalyst can be realized without reducing the activity of the other components.
A single cocatalyst may be used alone, or a combination of two or more different cocatalysts may be used.

### [Other Optional Components]

In addition to the components described above, a catalyst of the present invention may also include other optional components, provided the actions and effects of the present invention are not impaired. Examples of these other optional components include barium, magnesium, neodymium, praseodymium, strontium, and lanthanum. These metals may be included either as simple metals, or as oxides, composite oxides, carbonates, nitrates or combinations thereof. Furthermore, in order to prevent catalyst degradation, additional silica and/or alumina (for example, silica-added alumina) may be included in addition to the silica and alumina incorporated within the zeolite.
A single optional component may be used alone, or a combination of two or more different optional components may be used.

### [Blend Quantity of Each Component]

In a catalyst of the present invention, in terms of being able to achieve satisfactory actions and effects with a minimal quantity of the catalyst, the combined quantity of the aforementioned titania and zeolite is preferably within a range from 80 to 95% by weight, and even more preferably from 85 to 90% by weight, relative to the catalyst of the present invention.

### [Noble Metal Carrier]

In a catalyst of the present invention, a carrier comprising the components described above must support a noble metal. This support enables favorable manifestation of the catalytic activity of the noble metal, which further improves the removal rates for HC, CO and SOF, and also improves the removal rate for particulate matter. Examples of the noble metal include platinum, palladium, rhodium, ruthenium, and indium, although platinum is preferred.

The supported quantity of the noble metal is typically within a range from 0.3 to 6.0% by weight, and is preferably from 1 to 4% by weight, relative to the catalyst of the present invention. Provided the supported quantity satisfies this range from 0.3 to 6.0% by weight, the effects of supporting the noble metal are satisfactorily realized.
A single noble metal may be used alone, or a combination of two or more different noble metals may be used.

Accordingly, in an example of the most preferred embodiment of the catalyst of the present invention, the oxidation catalyst described above comprises a carrier containing a titania and a zeolite, and platinum supported on the carrier, wherein
the titania comprises a heat-resistant titania, and is included within the catalyst in a quantity within a range from 35 to 60% by weight,
the zeolite comprises a ZSM-5 type zeolite and/or a Beta type zeolite, and is included within the catalyst in a quantity within a range from 35 to 50% by weight, and
the quantity of platinum within the catalyst is within a range from 0.3 to 6.0% by weight.

### [Method of Preparing Oxidation Catalyst]

A catalyst of the present invention can be prepared by any appropriate method, and can be prepared by mixing together each of the components described above (including the titania and zeolite, and in some cases the cocatalyst and optional components), impregnating the thus obtained mixture with an aqueous solution or the like of a compound of the noble metal in order to support the noble metal on the mixture, and then subjecting the mixture with the noble metal supported thereon to wet grinding to form a slurry.

### [Usage Environment for Oxidation Catalyst]

A catalyst of the present invention can be used without any effects from the surrounding environment. For example, regardless of whether the temperature of the exhaust gas is low (for example, room temperature (20°C)), or the temperature of the exhaust gas is high (for example, 700°C) as a result of the operational state of a diesel engine or the like, the functions of the catalyst are substantially the same. Typically, the catalyst is used at a temperature within a range from 70 to 800°C, and is preferably used at a temperature within a range from 100 to 600°C. Because the catalytic function manifests readily across this type of wide temperature range, excellent exhaust gas purification performance can be achieved even under the conditions specified for the ECE and EUDC operational modes in the European exhaust gas emission standards.

### [Catalyst Structure for Exhaust Gas Purification]

A catalyst structure for exhaust gas purification according to the present invention comprises a support, and an aforementioned oxidation catalyst for exhaust gas purification supported on the support. Examples of the support include cordierite, alumina, mullite, and simple metals. Specific examples of the above catalyst structure for exhaust gas purification include flow-through supports using a continuous regeneration system (for example, oxidation catalyst (flow-through) + filter systems, and oxidation catalyst-supported filter systems). The catalyst structure for exhaust gas purification according to the present invention can be used in any application that requires the removal of CO, HC and SOF and the like from an exhaust gas, but is preferably used in applications that involve purification of the exhaust gas from a diesel engine.
The supported quantity of the oxidation catalyst for exhaust gas purification within the aforementioned catalyst structure for exhaust gas purification is preferably within a range from 55 to 120 g/L, and is even more preferably from 65 to 95 g/L, per unit volume of the above support.

### [Method for Purifying Exhaust Gas]

An oxidation catalyst of the present invention can be used within an aforementioned catalyst structure for exhaust gas purification in the manner described above. The catalyst structure for exhaust gas purification may be used in any appropriate manner, but is preferably used in a method wherein an exhaust gas emitted from an internal combustion engine such as a diesel engine is brought into contact with the catalyst structure within an apparatus fitted to the internal combustion engine, thereby reducing the quantities of CO, HC and SOF within the exhaust gas. Furthermore, a separate purification apparatus may also be provided between the internal combustion engine and the catalyst structure for exhaust gas purification. In those cases where diesel oil comprising sulfur is used as the fuel for the internal combustion engine, the effects of the sulfur poisoning resistance of the oxidation catalyst and the catalyst structure of the present invention are particularly pronounced.

### [Examples]

As follows is a more detailed description of the present invention using a series of examples, although the present invention is in no way limited by these examples. Details relating to each of the components used in the examples are as shown below. The quantities (weight % values) of each of the components shown in the tables represent values relative to the weight of the oxidation catalyst, and are rounded to one decimal place.

### < Oxidation Catalyst Structural Components>

- Alumina
   γ-alumina (reference catalyst of the Catalysis Society of Japan: JRC-ALO-5)
- Titania
   Anatase titania (BET specific surface area: approximately 100 m²/g)
- Zeolite
   H-ZSM-5 (SiO₂/Al₂O₃ (molar ratio) = 25)
   Fe-Beta (SiO₂/Al₂O₃ (molar ratio) = 40, Fe: 1% by weight)
   H-Beta (SiO₂/Al₂O₃ (molar ratio) = 40)
- Cocatalyst
   CeO₂/ZrO₂ (20% by weight CeO₂/80% by weight ZrO₂
- Noble metal
   Aqueous solution of chloroplatinic acid
- Other optional component
   Silica-added alumina (20% by weight SiO₂ / 80% by weight Al₂O₃)

### <Examples 1 to 6, Comparative Examples 1 to 2>

Using the components and blend quantities shown below in Table 1, the components other than the noble metal were mixed together, a quantity of the aqueous solution of chloroplatinic acid equivalent to 20 g of the noble metal (platinum) was impregnated into, and supported on the mixture, and wet grinding was then conducted to prepare a slurry (an oxidation catalyst). This slurry was then coated onto a flow-through support of height 5.66 inches and diameter 6 inches (400 cell/6 mil) in sufficient quantity to provide a quantity of the noble metal equivalent to 2 g/L per unit volume of the support, thus yielding a catalyst structure. Using this catalyst structure, the CO emission quantity and HC emission quantity (and the S accumulation quantity in the case of the example 1) were measured and evaluated in accordance with the evaluation methods described below.

### <Comparative Example 3>

With the exception of using γ-alumina as an activated alumina instead of the titania and silica-added alumina used in the example 1, the same method as the example 1 was used to prepare a slurry (an oxidation catalyst), and prepare a catalyst structure. Using this catalyst structure, the S accumulation quantity was measured and evaluated in accordance with the evaluation method described below.

### <Evaluation Methods>

### 1. CO Emission Quantity and HC Emission Quantity

Each of the catalyst structures prepared in the examples and comparative examples was aged in air in an electric furnace at 800°C for 20 hours, and was then used in an engine test. The engine test was conducted using a 5L DI TI (5L direct injection, fitted with a turbo-intercooler) benchtop engine, with the aged catalyst structure positioned at a point 1.5 m downstream from the engine. In this test, JIS No. 2 diesel fuel (S concentration: 30 to 35 ppm by weight) was used as the fuel. The catalyst performance was evaluated using the European exhaust gas evaluation mode used for passenger cars (ECEx4 + EUDC). The mode total CO emission quantity and HC emission quantity (for one full cycle) of this evaluation mode were measured using an exhaust gas analyzer (product name: MEXA 7400D, manufactured by Horiba, Ltd.). The results are shown in Table 1 and Table 2.

### 2. S Accumulation Quantity

Using an 8L DI TI diesel benchtop engine, a S accumulation test was conducted under conditions including an engine revolution rate of 2,800 rpm, and an engine load of 75%. In this test, a high sulfur concentration diesel fuel (JIS No. 2, S concentration: 500 ppm by weight) was used as the fuel. First, using the engine settings listed above, the inlet temperature for the catalyst portion of the catalyst structure was held at 530°C, and S poisoning aging was conducted for 50 hours. Subsequently, the catalyst structure was crushed, and the S accumulation quantity was measured using XRF analysis. The results are shown in Table 1 and Table 2. In the tables, the values for sulfur (S accumulation quantity) represent the "S accumulation quantity relative to the catalyst structure" expressed as a weight percentage.

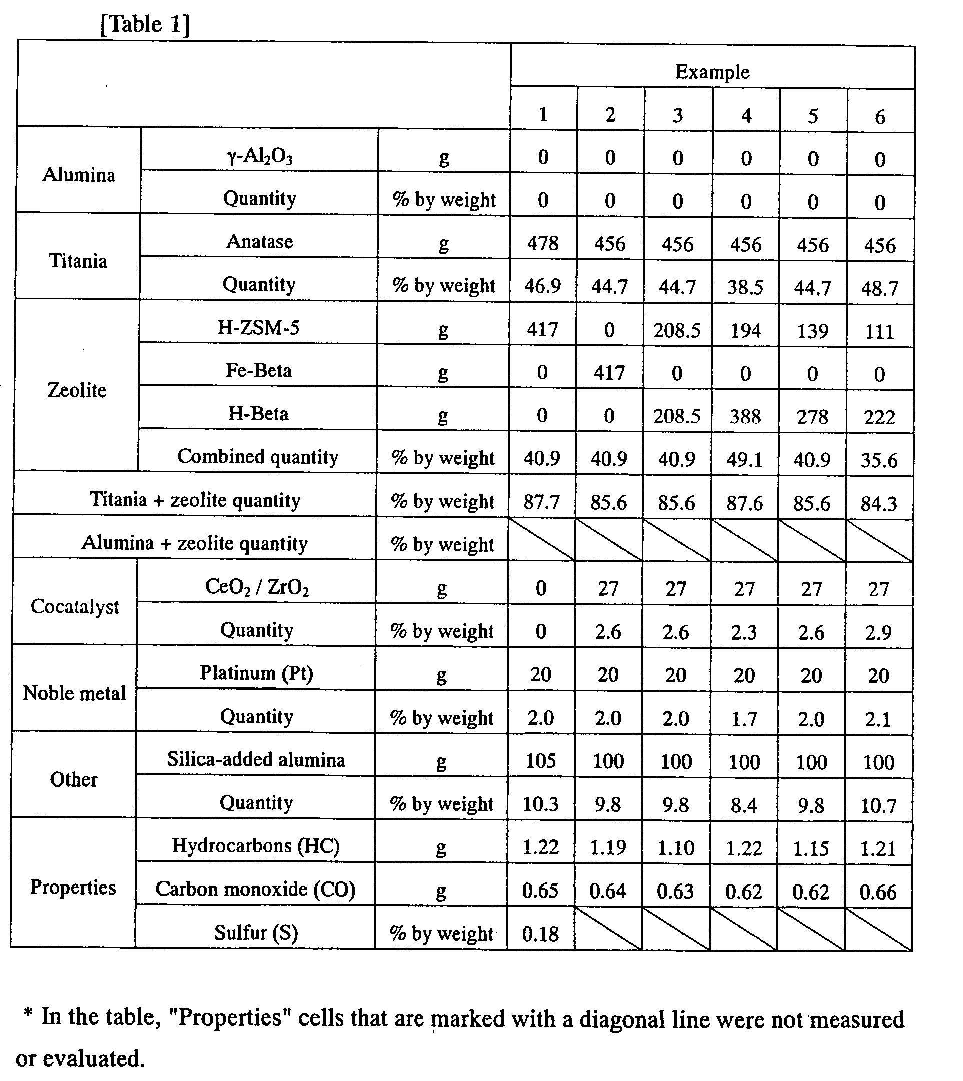

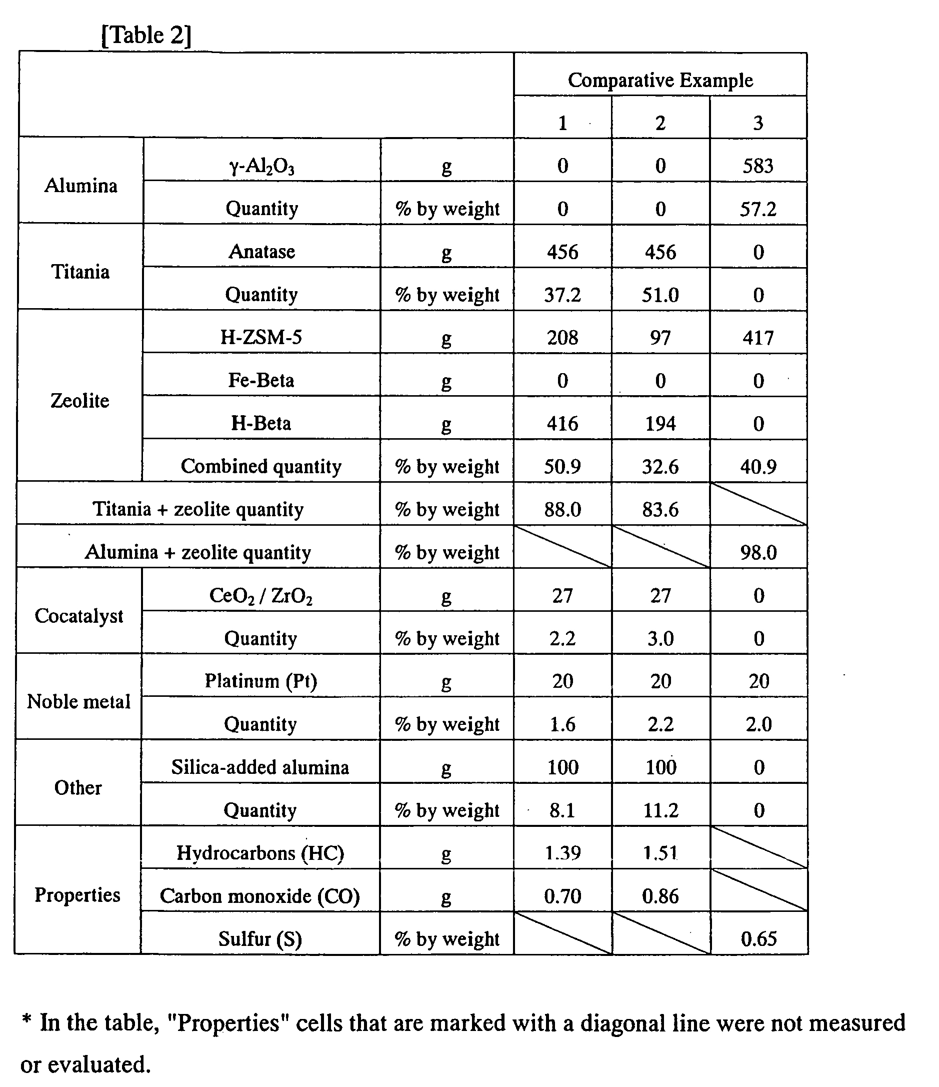

### <Evaluation>

The catalysts of the examples 1 to 6 satisfy the requirements of the present invention, and exhibited excellent removal rates for CO and HC. In contrast, in the catalysts of the comparative example 1 and the comparative example 2, the quantity of the zeolite does not satisfy the requirements of the present invention, and both of these catalysts suffered from inferior CO and HC removal rates.
Furthermore, whereas sulfur adsorption in the catalyst of the example 1 was extremely small, the level of sulfur adsorption in the catalyst of the comparative example 3 was considerable. From these results it is evident that a catalyst of the present invention suffers almost no poisoning by sulfur incorporated within the exhaust gas, and is able to provide a stable purifying function over a sustained period.

## Claims

1. An oxidation catalyst for exhaust gas purification, comprising a carrier containing a titania and a zeolite, and a noble metal supported on said carrier, wherein a quantity of said zeolite is within a range from 35 to 50% by weight relative to said catalyst.

2. The oxidation catalyst according to claim 1, wherein a quantity of said titania is within a range from 35 to 60% by weight relative to said catalyst.

3. The oxidation catalyst according to claim 1, wherein said titania is a heat-resistant titania.

4. The oxidation catalyst according to claim 1, wherein said zeolite comprises a ZSM-5 type zeolite and/or a Beta type zeolite.

5. The oxidation catalyst according to claim 1, wherein said noble metal is platinum.

6. The oxidation catalyst according to claim 1, wherein a supported quantity of said noble metal is within a range from 0.3 to 6.0% by weight relative to said catalyst.

7. The oxidation catalyst according to claim 1, further comprising silica and/or alumina, in addition to silica and alumina contained within said zeolite.

8. An oxidation catalyst for exhaust gas purification, comprising a carrier containing a titania and a zeolite, and platinum supported on said carrier, wherein
said titania comprises a heat-resistant titania, and is present within said catalyst in a quantity within a range from 35 to 60% by weight,
said zeolite comprises a ZSM-5 type zeolite and/or a Beta type zeolite, and is present within said catalyst in a quantity within a range from 35 to 50% by weight, and
a quantity of said platinum within said catalyst is within a range from 0.3 to 6.0% by weight.

9. A catalyst structure for exhaust gas purification, comprising a support, and the oxidation catalyst for exhaust gas purification defined in claim 1 supported on said support.

10. The catalyst structure according to claim 8, wherein a supported quantity of said oxidation catalyst is within a range from 55 to 120 g/L per unit volume of said support.

11. A method for purifying exhaust gas, wherein an exhaust gas emitted from an internal combustion engine is brought into contact with the catalyst structure for exhaust gas purification defined in claim 9.

12. The method according to claim 11, wherein said internal combustion engine is a diesel engine.

13. The method according to claim 11, wherein a diesel oil containing sulfur is used as a fuel within said internal combustion engine.

## Amended claims

### Amended claims under Art. 19.1 PCT

**1.** An oxidation catalyst for exhaust gas purification, comprising a carrier containing a titania and a zeolite, and a noble metal supported on said carrier, wherein a quantity of said zeolite is within a range from 35 to 50% by weight relative to said catalyst.

**2.** The oxidation catalyst according to claim 1, wherein a quantity of said titania is within a range from 35 to 60% by weight relative to said catalyst.

**3.** The oxidation catalyst according to claim 1, wherein said titania is a heat-resistant titania.

**4.** The oxidation catalyst according to claim 1, wherein said zeolite comprises a ZSM-5 type zeolite and/or a Beta type zeolite.

**5.** The oxidation catalyst according to claim 1, wherein said zeolite is a Beta type zeolite.

**6.** The oxidation catalyst according to claim 1, wherein said noble metal is platinum.

**7.** The oxidation catalyst according to claim 1, wherein a supported quantity of said noble metal is within a range from 0.3 to 6.0% by weight relative to said catalyst.

**8.** The oxidation catalyst according to claim 1, further comprising silica and/or alumina, in addition to silica and alumina contained within said zeolite.

**9.** An oxidation catalyst for exhaust gas purification, comprising a carrier containing a titania and a zeolite, and platinum supported on said carrier, wherein
said titania comprises a heat-resistant titania, and is present within said catalyst in a quantity within a range from 35 to 60% by weight,
said zeolite comprises a ZSM-5 type zeolite and/or a Beta type zeolite, and is present within said catalyst in a quantity within a range from 35 to 50% by weight, and
a quantity of said platinum within said catalyst is within a range from 0.3 to 6.0% by weight.

**10.** The oxidation catalyst according to claim 9, wherein said zeolite is a Beta type zeolite.

**11.** A catalyst structure for exhaust gas purification, comprising a support, and the oxidation catalyst for exhaust gas purification defined in claim 1 supported on said support.

**12.** The catalyst structure according to claim 11, wherein a supported quantity of said oxidation catalyst is within a range from 55 to 120 g/L per unit volume of said support.

**13.** The catalyst structure according to claim 11 or 12, wherein the zeolite contained in said oxidation catalyst is a Beta type zeolite.

**14.** A method for purifying exhaust gas, wherein an exhaust gas emitted from an internal combustion engine is brought into contact with the catalyst structure for exhaust gas purification defined in claim 11.

**15.** The method according to claim 14, wherein said internal combustion engine is a diesel engine.

**16.** The method according to claim 14, wherein a diesel oil containing sulfur is used as a fuel within said internal combustion engine.
